# EUROPEAN PATENT SPECIFICATION

(11) **EP 4 749 575 B1**
(45) Date of publication and mention of the grant of the patent: **09.09.2026**
(21) Application number: 24861338.2
(22) Date of filing: 30.09.2024
(51) Int. Cl.: G06T 7/73, G06V 20/17, G06V 20/52, G06V 20/64, G05D 1/243, G05D 1/689

(54) **INFORMATION PROCESSING METHOD, INFORMATION PROCESSING APPARATUS, AND PROGRAM**
INFORMATIONSVERARBEITUNGSVERFAHREN, INFORMATIONSVERARBEITUNGSVORRICHTUNG UND PROGRAMM
PROCÉDÉ DE TRAITEMENT D'INFORMATIONS, DISPOSITIF DE TRAITEMENT D'INFORMATIONS ET PROGRAMME

(43) Date of publication of application: 27.05.2026
(73) Proprietor: CalTa Inc., Minato-ku Tokyo 108-0074 (JP)
(72) Inventor: TAKAMIZAWA Takuya, Tokyo 108-0074 (JP)
(74) Representative: Hasegawa, Kan
(86) International application number: PCT/JP2024/034957
(87) International publication number: WO 2026/069667

(56) References cited:
- WO-A1-2023/108210
- CN-A- 116 573 178
- JP-A- 2018 133 010
- JP-A- 2020 149 611
- US-A1- 2021 018 447
- US-A1- 2023 408 263

## Description

### [FIELD OF THE INVENTION]

The present disclosure relates to an information processing method, information processing apparatus, and program for determining a target position and target posture about a mobile body including an imaging apparatus.

### [BACKGROUND ART]

Conventionally, to inspect structures such as buildings and bridges for defects like cracks or chips, a method of capturing images by cameras mounted on robots or drones and ascertaining a condition of the object from the captured images is known. JP 2024 009 427 A discloses a method wherein, to link recorded video with shooting positions, camera positions are determined using Structure from Motion (SfM) technology, and thereafter, when a user specifies a position on a reference map, the captured image is displayed.

US 2021/0018447 A1 describes a structure management device that includes an image acquiring unit that acquires an image group, a damage detecting unit that analyzes images in the image group to detect damage of the structure, a three-dimensional design data acquiring unit that acquires three-dimensional design data indicating the structure, a combined information calculating unit that tracks point group data of feature points common in the overlap area between the images in the image group to calculate combined information including a camera position and a camera posture in a case of capturing the image by the camera and a three-dimensional position of the point group data, and a mapping unit that maps the detected damage on a surface of the structure indicated by the acquired three-dimensional design data based on the combined information calculated by the combined information calculating unit.

### [SUMMARY OF THE INVENTION]

### [TECHNICAL PROBLEM]

When defective areas are discovered during inspection of a structure, re-inspection may be necessary to ascertain progress of the defect. Conventionally, to shoot the same defective area during re-inspection, approximate camera positions are set. Consequently, due to differences in shooting conditions such as the exact position and angle of the camera depending on a person who operates the camera or inspection occasion, images showing different views of the defective area are obtained. When comparing the captured image with previous images, it is difficult to accurately ascertain a change in the defective area because images with different views of the defective area are compared.

JP 2024 009 427 A does not describe a detailed method for re-inspecting the defective area of the structure or techniques for setting camera shooting conditions during re-inspection.

Therefore, the present disclosure aims to provide a technology for determining a target position and target posture about a mobile body including an imaging apparatus to effectively perform re-inspection of an object.

### [TECHNICAL SOLUTION]

The present invention relates to an information processing method according to claim 1, a program according to claim 4, and a system according to claim 5. Claims 2 and 3 refer to specifically advantageous realizations of the information processing method according to claim 1.

An information processing method according to one aspect of the present disclosure for solving the above problem is an information processing method for determining a target position and target posture about a mobile body including an imaging apparatus for inspecting an object, wherein a computer calculates three-dimensional data about the object based on a plurality of images obtained by shooting the object using the imaging apparatus, and calculates positions and postures of the imaging apparatus when capturing the plurality of images, determines the position and posture of the imaging apparatus when shooting an area requiring inspection of the object identified based on the image obtained by shooting the object and the three-dimensional data, from among the calculated positions and postures of the imaging apparatus, and determines the target position and target posture about the mobile body including the imaging apparatus to shoot the area requiring inspection for subsequent inspection using the determined position and posture.

### [ADVANTAGEOUS EFFECT]

According to the present disclosure, it is possible to provide a technology for determining a target position and target posture about a mobile body including an imaging apparatus to effectively perform re-inspection of an object.

### [BRIEF DESCRIPTION OF THE DRAWINGS]

[FIG. 1] A figure showing the configuration of a system.
[FIG. 2] A figure showing the configuration of an information processing apparatus.
[FIG. 3] A flowchart showing an information processing method.

### [DESCRIPTION OF EMBODIMENT]

Embodiments of the present disclosure include, for example, the following configurations.

### [Item 1]

An information processing method for determining a target position and target posture about a mobile body including an imaging apparatus for inspecting an object,
wherein a computer
calculates three-dimensional data about the object based on a plurality of images obtained by shooting the object using the imaging apparatus, and calculates positions and postures of the imaging apparatus when capturing the plurality of images,
determines the position and posture of the imaging apparatus when shooting an area requiring inspection of the object identified based on the image obtained by shooting the object and the three-dimensional data, from among the calculated positions and postures of the imaging apparatus, and
determines the target position and target posture about the mobile body including the imaging apparatus to shoot the area requiring inspection for subsequent inspection using the determined position and posture.

### [Item 2]

The information processing method according to Item 1, wherein the computer evaluates a change in the area requiring inspection from the result of shooting the area requiring inspection using the mobile body controlled based on the determined target position and target posture.

### [Item 3]

The information processing method according to Item 1, wherein the computer determines waypoints of the mobile body including a plurality of the target positions for shooting each of a plurality of the areas requiring inspection.

### [Item 4]

A program for causing a computer to execute the information processing method according to any one of Items 1 to 3.

### [Item 5]

An information processing apparatus for determining a target position and target posture about a mobile body including an imaging apparatus for inspecting an object, comprising:
a processing unit, wherein the processing unit
calculates three-dimensional data about the object based on a plurality of images obtained by shooting the object using the imaging apparatus, and calculates positions and postures of the imaging apparatus when capturing the plurality of images,
determines the position and posture of the imaging apparatus when shooting an area requiring inspection of the object identified based on the image obtained by shooting the object and the three-dimensional data, from among the calculated positions and postures of the imaging apparatus, and
determines the target position and target posture about the mobile body including the imaging apparatus to shoot the area requiring inspection for subsequent inspection using the determined position and posture of the imaging apparatus.

Hereinafter, preferred embodiments of the present disclosure will be described in detail with reference to the appended drawings. **In** the present specification and the drawings, substantially identical functional configurations are designated by the same reference numerals to avoid duplicate explanation.

### <Details of Embodiment>

**In** the present embodiment, a technology for inspecting objects such as buildings and structures for presence or absence of damage, degree of damage such as cracks and chips is described. Objects for inspection may include, for example, buildings, structures, high-rise buildings, bridges, dams, wind power facilities, factories, transmission towers, communication towers, agricultural facilities, and forests etc. Inspection targets may include, for example, cracks or water leakage in exterior walls or roofs of building; deterioration or rebar rust of concrete; sagging, loosening of connection parts or deterioration of metal fittings of electric wires; cracks, deterioration or wear in wind turbine blades; cracks, corrosion or peeling of paint in bridge girders; surface deterioration, corrosion or leakage of chimneys and tanks; damage of piping or inspection of hazardous areas in chemical plants; structural damage, corrosion, loosening of bolts or cable conditions of communication towers or transmission towers; tree health and damage by insects; deterioration or damage conditions after disasters of agricultural facilities; and damage to facilities after typhoons and floods etc.

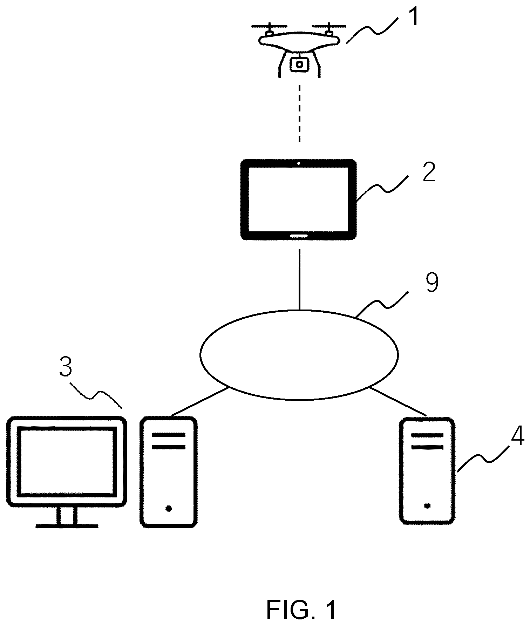

FIG. 1 shows a configuration diagram of a system in the present embodiment. The system comprises a mobile body 1, a control apparatus 2, an information processing apparatus 3, and a server (information processing apparatus) 4. These are connected by a network 9.

The mobile body (mobile apparatus) 1 is a device that moves by itself, such as a mobile robot, drone (unmanned aerial vehicle), or vehicle. The mobile body 1 includes a camera (imaging apparatus) which shoots a target object to be imaged for inspecting whether there are bad part such as a defective area. The camera has an image sensor including a photoelectric conversion element and can have a lens. The camera may have various functions such as function for obtaining still images through shooting, video recording functionality, aperture (brightness) variable function, zoom (variable focal length) function, and sensitivity adjustment function. The camera may be fixed to a structure of the mobile body or configured to be movable on the structure of the mobile body. In case where the camera is configured to be movable, a relative position and relative angle (posture) of the camera with respect to the mobile body 1 may be controlled. The position and posture of the camera in three-dimensional space are defined relative to the position and posture (roll, pitch, yaw) of the mobile body 1, and may be set to be synonymous with the position and posture of the mobile body 1. The posture of the camera can be defined by angles around three orthogonal axes, but when the camera is movable with respect to the mobile body, it can be set according to the number of movable axes of the camera, and when there is one axis as the movable axis, the angle parameter of the camera on the one axis is set. The current position of the mobile body 1 and the camera can be measured using a GPS module or an acceleration sensor, or it can also be determined using self-localization technologies such as V SLAM or Lidar SLAM from a reference point, or methods using sound, WiFi, or Bluetooth.

The control apparatus 2 is a device for communicating with the mobile body 1 and controlling the mobile body 1. The control apparatus 2 communicates with the mobile body 1 to exchange control signals for controlling the position and angle of the mobile body 1, and camera, as well as image data captured by the camera. The control apparatus 2 may be placed near a site where the mobile body 1 is deployed and communicate wirelessly with the mobile body 1 using a specific method, or the control apparatus 2 may be installed at a remote location away from the site where the mobile body 1 is deployed and communicate wirelessly with the mobile body 1 via a base station, parent device, or mobile network. The control apparatus 2 may include a control panel operated by a human.

The information processing apparatus 3 is a device for determining (generating) a target position and target posture for the mobile body including a camera to shoot an area requiring inspection for inspection purposes.

The server 4 is a device for performing Structure from Motion (SfM) to calculate three-dimensional point clouds based on images captured from multiple viewpoints. The server 4 obtains image data such as videos and multiple still images captured by the camera of the mobile body 1 and constructs a three-dimensional point cloud of the object from the image data.

The information processing apparatus 3 communicates with the control apparatus 2 and the server 4 via the network 9, sends data to the control apparatus 2 to control the mobile body 1, and obtains data obtained by the mobile body 1 via the control apparatus 2. The information processing apparatus 3 also sends data such as images to the server 4 and receives results of data processing performed by the server 4.

The configuration of the information processing apparatus 3 is described. The information processing apparatus 3 has a computer that is a general-purpose computer such as a personal computer, or a computer provided in devices such as smartphones and tablets. The information processing apparatus 3 can determine the movement path of the camera of the mobile body 1 through installed software or applications (programs).

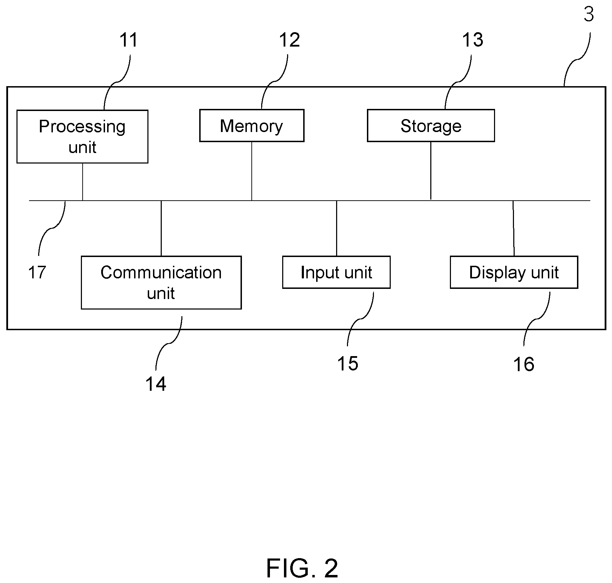

FIG. 2 shows a configuration diagram of the information processing apparatus 3. The information processing apparatus 3 has a processing unit 11, memory 12, storage 13, communication unit 14, input unit 15, and display unit 16. These are electrically connected to each other via a bus 17.

The processing unit 11 is an arithmetic device that controls the overall operation of the information processing apparatus 3, controls data transmission and reception between each unit, and performs information processing necessary for program execution and authentication processing. The processing unit 11 includes an arithmetic processing device that is a processor such as a CPU, GPU, or FPGA, and executes various information processes described below by executing programs stored in the storage 13 and deployed in the memory 12.

The memory 12 (storage unit) includes a main storage composed of volatile storage devices such as DRAM, and auxiliary storage composed of non-volatile storage devices such as flash memory or HDD. The memory 12 is used as a work area for the processing unit 11, and also stores BIOS executed at the startup of the information processing apparatus 3 and various setting information.

The storage 13 (storage medium) includes storage devices such as HDD and SSD, and stores various programs such as applications and programs. A database storing data used in each process is also constructed in the storage 13.

The communication unit 14 connects the information processing apparatus 3 to the network 9. The communication unit 14 communicates directly with external devices or via network access points using, for example, wired LAN, wireless LAN, Wi-Fi (Wireless Fidelity, registered trademark), infrared communication, Bluetooth (registered trademark), or short-range or contactless communication methods. The input unit 15 is an information input device such as a keyboard, mouse, or touch panel.

The display unit (display device) 16 has a display that displays information calculated by the processing unit 11 or information received from external devices by the communication unit 14. The display unit 16 provides a graphical user interface (GUI) that displays various information on its screen. The display unit 16 is not limited to one that is integrated with the information processing apparatus 3, but may be a display (display device) provided separately from the information processing apparatus 3 and connected to the information processing apparatus 3.

The bus 17 is connected commonly to each of the above components and transmits, for example, address signals, data signals, and various control signals.

Next, the configuration of the server 4 is described. The server 4 has a processing unit, memory (storage unit), storage (storage medium), and communication unit. These are electrically connected to each other via a bus. The processing unit is an arithmetic device that controls the overall operation of the server 4, controls data transmission and reception between each unit, and performs information processing necessary for program execution and authentication processing. The processing unit includes an arithmetic processing device that is a processor such as a CPU, GPU, or FPGA, and executes various information processes described below by executing programs stored in the storage and deployed in the memory.

The storage of the server 4 stores various programs such as applications and programs. A database storing data used in each process is constructed in this storage. Software programs for performing SfM are stored and saved in the storage or memory. The communication unit connects the server 4 to the network 9. This communication unit communicates with the control apparatus 2 or the information processing apparatus 3 via the network 9. Received information is stored in the memory, used for information processing performed by the processing unit, or stored in the storage.

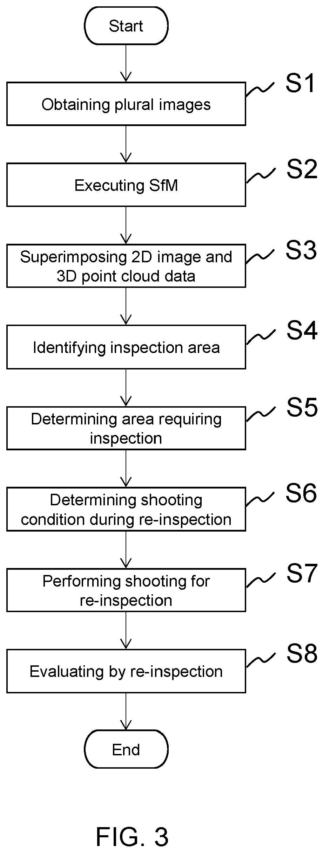

Next, a method using the above system is described. FIG. 3 shows a flowchart of the method.

First, the object is shot using the mobile body 1 to obtain image data (S1). The camera of the mobile body 1 shoots an inspection target object such as a building or structure from various angles. The shooting may be done by video recording the inspection target object using the camera of the mobile body 1, or by capturing a plurality of still images. When shooting, maintaining a constant distance between the object and the camera enables more accurate reconstruction of three-dimensional (3D) information. The mobile body 1 sends the captured images to the control apparatus 2. In the case of video recording, the mobile body 1 can send the images to the control apparatus 2 while moving and shooting. The control apparatus 2 obtains the image data sent from the mobile body 1. The plurality of images can be obtained by cutting out the plurality of images from video data in case the inspection target object is video recorded using the camera of the mobile body 1, or by capturing the plurality of still images.

During shooting, it is preferable to shoot the object from multiple angles so that there is a 30-80% overlap between images in the plurality of captured images. Also, the shooting may be done by autonomously moving the mobile body 1, by automatically moving the mobile body 1 with the control apparatus 2, or by controlling the position and posture of the mobile body 1 by having a person operate the control apparatus 2.

When automatically moving the mobile body 1, the control apparatus 2 sets a waypoint including a point on the path along which the mobile body 1 moves, and controls the position of the mobile body 1 so that the mobile body 1 moves according to the waypoint. The control apparatus 2 sends the waypoint to the mobile body 1 as target position, and performs, for example, position control based on the difference between the target position and the measured current position. The control apparatus 2 can also control shooting conditions such as the angle (direction), focus position, brightness, and sensitivity of the camera of the mobile body 1 during video recording.

The waypoint can be set by specifying a point using a three-dimensional map or map data of the shooting area that are prepared in advance on specific software. For example, if the mobile body 1 is a drone, the user can set the waypoint by clicking on the point on the GUI map that the drone should pass through toward its destination. This includes the drone's flight path and shooting spots. Position information such as altitude and latitude/longitude can also be set for each waypoint. It is also possible to specify a time period the drone hovers at each waypoint and the posture of the camera. Speed at which the drone moves between waypoints can also be set. Based on the waypoint set in this way, the exact route of the mobile body 1 is programmed using GPS or an inertial navigation system (INS).

For example, when shooting a building, waypoints are set along the exterior wall of the building, and the drone shoots with its camera at each waypoint, or when shooting a bridge, waypoints are set to shoot the bridge piers and the underside of the bridge, and the drone moves around the bridge.

If necessary as appropriate, pre-processing can be performed on the images obtained by the shooting in S1 before inputting data into the SfM algorithm. For example, unnecessary images can be removed, or the brightness and contrast of the images can be adjusted.

Next, the server 4 executes SfM based on the plurality of images obtained in S1 (S2). The server 4 obtains the image data sent from the control apparatus 2 or the information processing apparatus 3. The information processing apparatus 3 may instruct the control apparatus 2 to send the captured image data to the server 4, or the control apparatus 2 may send the acquired image data to the information processing apparatus 3 in response to a request from the information processing apparatus 3, and the information processing apparatus 3 may send the image data to the server 4.

The information processing method performed by the processing unit of the server 4 is described. First, the processing unit of the server 4 detects feature points in the images using the plurality of images obtained in S1 or the pre-processed images. The feature points are unique points in the image that are easy to match from different viewpoints, and correspond to parts such as edges or corners of objects. Common algorithms include SIFT (Scale-Invariant Feature Transform) and SURF (Speeded Up Robust Features) etc.

The processing unit of the server 4 matches feature points detected from each image across the plurality of images. It matches common points in images captured from different viewpoints and identifies which part of which image represents the same point. Feature-based methods (such as feature descriptors like SIFT or SURF) or nearest neighbor search algorithms are used for matching.

The processing unit of the server 4 estimates the position and posture (angle, orientation) of the camera when each image was taken, from the position information (2D coordinate) of feature points matched in two images. For example, using a mathematical model called epipolar geometry, the relative position and posture of the camera can be calculated by integrating information from multiple viewpoints based on parallax. In this case, the fundamental matrix or essential matrix is calculated to estimate the relative position and posture between cameras. Alternatively, the position and posture of the camera can also be calculated using AI such as Gaussian Splatting. In this way, the position and posture of the camera in 3D space can be determined, and the image and the position and posture of the camera when the image was taken can be associated and stored in such as a database in the storage unit.

The processing unit of the server 4 constructs a three-dimensional point cloud using the feature points matched at each viewpoint. Specifically, based on the estimated camera positions and postures, the coordinates of the corresponding three-dimensional points are calculated from the 2D feature point coordinates that match across the plurality of images. This process is based on triangulation. With this method, where the feature of the object appearing in 2D images is located in 3D space can be determined. The 3D point cloud is represented by 3D coordinates, with each point representing a position corresponding to a position on the surface of the object. This allows for a rough understanding of the shape of the object. If necessary, more accurate camera positions and 3D point clouds can be obtained by performing bundle adjustment, which simultaneously adjusts all camera positions and the 3D point cloud to minimize errors.

The 3D point cloud obtained at this stage is sparse, so to obtain a dense point cloud, more corresponding points need to be found and added. This can be done using algorithms such as stereo matching and optical flow. In stereo matching, a dense point cloud is generated by finding corresponding points for each pixel using two or more image pairs. In optical flow, a more detailed point cloud is generated by calculating pixel movements between temporally consecutive images. A dense 3D point cloud can also be obtained using methods such as Patch-based Multi-view Stereo (PMVS), which estimates where each point is located using pixel information from the image. Also, if the point cloud contains noise such as outliers, the noise may be removed and optimization may be performed.

Note that the camera position and 3D point cloud calculated by SfM are estimated relatively, so to obtain actual size and distance, methods using external scale information (e.g., known object dimension, GPS data) can be used. For example, a known survey point or target can be placed at the inspection site in advance during the shooting in S1, and after SfM is completed, their coordinate values can be entered for fitting. Alternatively, a target such as an AR marker with known arbitrary coordinates can be placed in the image data during SfM processing, and by providing their coordinate values during SfM processing for fitting, the output of the SfM processing can be represented in a real-world coordinate system.

The processing unit of the server 4 generates a mesh model (3D model) by connecting points in the constructed point cloud data. Meshing is a step to smoothly represent shapes by polygonizing the 3D point cloud, making the detailed shape of the object more clearly visible.

The server 4 can output the obtained 3D point cloud and 3D model to the information processing apparatus 3 in various formats.

Next, the processing unit of the information processing apparatus 3 superimposes the images obtained by shooting, and the obtained 3D model or 3D point cloud data (S3). This allows applying textures (surface color and pattern) to the 3D data, making it closer to the actual appearance of the object. This can be done using a 3D viewer displayed on the display (display device) of the information processing apparatus 3. Specifically, the viewer's eye position is set to the camera position obtained in S2, and the viewpoint is adjusted along the direction (line of sight) of the camera obtained in S2. Then, by generating a plate-like object model in front of the camera position in the line-of-sight direction and placing the image on that object model, the 2D image and 3D data can be superimposed.

Next, the user identifies an area (inspection area) of the object to be the above-described inspection target, such as a damaged area of the object, by viewing the images superimposed on the 3D data displayed on the viewer screen (S4). The user can confirm the inspection target while viewing the images displayed on the viewer (screen of a display device), identify the position on the 3D data, and input the inspection results (evaluation) for the position, allowing the information processing apparatus 3 to store these data.

The information processing apparatus 3 determines an area requiring re-inspection (area requiring inspection) such as an area selected from the inspection area identified in S4, or an area that needs future monitoring (S5). The determination of the area requiring inspection can be done, for example, by the user specifying using the viewer as in S4, or based on the evaluation result when evaluating the inspection area.

Next, the information processing apparatus 3 determines a condition for shooting the area requiring inspection during re-inspection (S6). First, based on the position information of the area requiring inspection determined in S5, the information processing apparatus determines the image appropriate for evaluating the area requiring inspection from the image including the area requiring inspection among the images obtained in the S1 shooting. Appropriate images are, for example, those that clearly show the condition of defects, losses, damage, or other flaws in the inspection target, and are suitable for user observation.

Then, using the database that associates images with camera positions and postures stored in S2, the information processing apparatus extracts the information on the position and posture of the camera when the image appropriate for evaluating the area requiring inspection was taken. If there are a plurality of images appropriate for evaluating the area requiring inspection, the information on the position and posture of the camera when each image was taken is extracted using the above database for each image. Also, if there are a plurality of areas requiring inspection determined in S5, the information processing apparatus determines each appropriate image for evaluating each area requiring inspection, and extracts the information on the position and posture of the camera when the image of the area requiring inspection was taken using the above database.

In this way, the position and posture of the camera for shoothing the area requiring inspection are determined, and using the information on the determined position and posture of the camera, the target position and target posture for the mobile body including the camera for shooting the area requiring inspection during re-inspection are determined. If the camera is fixed to the mobile body, by setting the position and posture of the camera to be equivalent to the position and posture of the mobile body, the position and posture of the camera can be controlled by controlling the position and posture of the mobile body as control parameters. Therefore, the target position and target posture of the mobile body 1 or the camera are determined as the target position and target posture for shooting the area requiring inspection during re-inspection. Alternatively, the target position and posture of the mobile body can be generated by incorporating an offset value to the target position and posture of the camera, and the position and posture of the mobile body can be controlled. Further, if the camera is movable relative to the mobile body, the relative position and posture of the camera are controlled together with the position and posture of the mobile body, so the target position and target posture of the mobile body and the relative target position and target posture of the camera are determined. If the position and posture of the camera calculated in SfM in S2 and the position and posture (angle) of the camera stored in S2 are relative values in a computational coordinate system, they are converted to the real-world coordinate system where the mobile body and camera are placed, as described above. For example, if the mobile body 1 moves in WGS84 (the coordinate system of the Global Navigation Satellite System (GNSS)), the target position and target posture are converted to the GNSS coordinate system.

If there are a plurality of target positions and postures for the camera to shoot the area requiring inspection, the plurality of positions can be set as waypoints (point information on path), and a path connecting the plurality of positions can be set as the path for the camera to move. Also, if there are the plurality of areas requiring inspection, a path connecting each target position for the camera to shoot each area requiring inspection can be set as the path for the camera to move. The camera's movement path can be determined so that the length of the path passing through each target position is minimized, or by specifying the order in which to pass through each target position. Further, the setting of the movement path may also include settings for the mobile body's movement speed, acceleration/deceleration information, and stop time.

As conditions for shooting the area requiring inspection during re-inspection, it is also possible to set conditions for various camera functions such as camera zoom. Settings can also be made to shoot the area requiring inspection at a higher magnification than the previous shooting during re-inspection.

The condition determined in S6 is sent to the control apparatus 2 via the network 9 for re-inspection. Further, the condition determined in S6, such as the target position and target posture of the camera for shooting the area requiring inspection, and the movement path of the camera (mobile body 1), may be displayed on the screen of the display device for visual confirmation by the user.

Next, shooting for re-inspection is performed using the camera of the mobile body 1 (S7). During the re-inspection shooting, the control apparatus 2 controls the mobile body 1 based on the condition determined in S6. The control of the mobile body 1 can be automated by the control apparatus 2. The information processing apparatus 3 sends the condition for shooting the area requiring inspection determined in S6 to the control apparatus 2, and commands the control apparatus 2 to control the mobile body 1. Specifically, in the real three-dimensional coordinate system, the control apparatus 2 moves the mobile body 1 based on the waypoint so that the position and posture of the camera of the mobile body 1 become the target position and target posture for shooting the area requiring inspection determined in S6, and controls the position and posture of the camera of the mobile body 1. Then, the mobile body 1 shoots the area requiring inspection with the camera when the camera of the mobile body 1 reaches the target position and target posture for shooting the area requiring inspection determined in S6. The mobile body 1 may stop when it reaches the target position and target posture for shooting the area requiring inspection determined in S6, or it may slow down just before reaching the position for shooting the area requiring inspection determined in S6, and shoot the area requiring inspection with the camera. **If** there are the plurality of areas requiring inspection, the position and posture of the camera are controlled to reach the target position and posture for each area requiring inspection, and imaging is performed. The images captured by the camera are sent to the control apparatus 2, and the control apparatus 2 sends the image data to the information processing apparatus 3 via the network 9. In practice, control errors are included in the control of the position and posture of the mobile body 1 and the camera. Also, the camera may be controlled to shoot the area requiring inspection when the position and posture of the camera for shooting the area requiring inspection are within a predetermined range including the target position and posture determined in S6. The predetermined range can be defined based on the allowable range where images can be visually identified as the same.

Next, the information processing apparatus 3 evaluates the area requiring inspection using the shooting result of the re-inspection (S8). The information processing apparatus 3 displays image data for the re-inspection obtained in S7 on the viewer. At this time, the image of the area requiring inspection captured in S1 may be displayed simultaneously on the same screen, or it may be displayed on a separate screen according to user operation. This allows comparison between the image during the re-inspection and the image obtained from the previous shooting. The viewer displaying the images may be one that simply displays 2D images, or it may be the 3D viewer used in S3-S5. The user evaluates the change, progress, and advancement of the condition of the area requiring inspection by comparing the image during the re-inspection and the image obtained from the previous shooting displayed on the display screen. The user can input the evaluation results, which are saved in memory or other storage in association with the area requiring inspection (3D position). The image data for the re-inspection can also be stored in the storage device in association with the area requiring inspection (3D position), and can be appropriately retrieved and displayed on the display device according to user selection.

The information processing apparatus 3 may output the results of comparing the image data for re-inspection obtained in S7 and the image captured in S1 for the same area requiring inspection, using calculation processing such as image processing algorithm or artificial intelligence (AI). The output comparison results may be a display that emphasizes the differences in the images, or may be output as an indicator, a numerical value, or an evaluation comment.

According to the present embodiment, since the position and posture of the camera that captured the image of the area requiring inspection during re-inspection are the same as the position and posture of the camera that captured the image suitable for evaluating the area requiring inspection, comparing these images allows for a more accurate understanding of the change, progress, and advancement of the condition of the area requiring inspection. Conversely, if the position and posture of the camera when shooting the area requiring inspection during re-inspection differ from those during the previous shooting, the appearance of the area requiring inspection in the resulting images changes, and this difference in appearance may lead to incorrect evaluation of the condition of the area requiring inspection. In practice, since control errors are included in the control of the position and posture of the mobile body 1 and the camera, this control error will appear as differences in images captured by the camera multiple times, but they can be defined as being within a range of the same image.

Thereafter, if further inspection of the area requiring inspection is to be conducted periodically or at any time, S7 and S8 are repeated. This provides images of the area requiring inspection taken from the same position and with the same posture for each inspection, allowing for continuous monitoring of the progress of the condition of the area requiring inspection over a relatively long period.

As described above, the information processing apparatus 3 and the server 4 calculate three-dimensional data about the object based on the plurality of images obtained by shooting the object using the imaging apparatus, and calculate the positions and postures of the imaging apparatus when capturing the plurality of images, determine the area requiring inspection of the object based on the images obtained by shooting the object and the three-dimensional data, determine, from among the calculated positions and postures of the imaging apparatus, the position and posture of the imaging apparatus when shooting the area requiring inspection, and using the determined position and posture of the imaging apparatus, determine the target position and target posture about the mobile body including the imaging apparatus to shoot the area requiring inspection for subsequent inspection such as re-inspection.

While the preferred embodiments of the present disclosure have been described in detail with reference to the attached drawings, the technical scope of the present disclosure is not limited to such examples. Also, not all the components shown in the embodiments are necessarily essential components of the present disclosure. Also, features shown in each embodiment can be applied to other embodiments as long as they do not contradict each other.

The information processing apparatus 3 and the server 4 may be configured as a single device, or as multiple distributed information processing devices, or as a virtual server or a container in the cloud.

The information processing apparatus 3 or the server 4 may further execute SfM using multiple images or video data captured during re-inspection to construct the latest three-dimensional data. Information of the three-dimensional point cloud or shape of the object may also be updated using the three-dimensional data obtained during re-inspection. Furthermore, the target position and posture about the mobile body 1 for the next inspection may be modified using the camera position and posture calculated by SfM during re-inspection. These update and modification information may also be displayed on the display device.

During re-inspection, when the mobile body is moved according to the determined target position and posture, the waypoint may be modified by creating a new route to avoid obstacles if there are obstacles on the movement path. Also, a safe route may be created to avoid adverse conditions depending on the weather conditions (wind speed, rain, etc.) of the space where the mobile body is placed and the strength of the GPS signal. The surrounding conditions of the mobile body can be measured using various sensors such as cameras, distance sensors, anemometers, and barometers. The waypoint can be adjusted by feeding back information obtained from these sensors. This allows flexible control of the mobile body in response to changes in the environment around the mobile body, suppressing damage and accidents to the mobile body, and ensuring reliable inspection of the object.

Also, the number of mobile bodies 1 is not limited to one, and multiple mobile bodies may be prepared and controlled. The entire created movement path may be divided by the number of mobile bodies, and each mobile body may be assigned one-to-one to each divided movement path, so that each mobile body moves along its assigned waypoint, thereby performing the inspection. When controlling multiple mobile bodies simultaneously, each mobile body may communicate with each other for autonomous control.

### [INDUSTRIAL APPLICABILITY]

The present disclosure relates to an information processing method, information processing apparatus, and program for determining a target position and target posture for a mobile body including an imaging apparatus, and has industrial applicability.

### [REFERENCE SIGNS LIST]

1 Mobile body
2 Control apparatus
3 Information processing apparatus
4 Server

## Claims

1. An information processing method for determining a target position and target posture about a mobile body (1) including an imaging apparatus for inspecting an object,
wherein the method comprises:
by a computer (3), calculating three-dimensional data about the object based on a plurality of images obtained by shooting the object using the imaging apparatus, and calculating positions and postures of the imaging apparatus when capturing the plurality of images; and
by the computer (3), determining a position and posture of the imaging apparatus when shooting an area requiring inspection of the object identified based on the images obtained by shooting the object and the three-dimensional data, from among the calculated positions and postures of the imaging apparatus;
**characterized in that** the method comprises:
by the computer (3), determining the target position and target posture about the mobile body (1) including the imaging apparatus using the determined position and posture; and
by a control apparatus (2), controlling a position and posture of the mobile body (1) based on the determined target position and target posture, for shooting the area requiring inspection with the imaging apparatus in a subsequent inspection.

2. The information processing method according to claim 1, wherein the computer evaluates a change in the area requiring inspection from the result of shooting the area requiring inspection using the mobile body (1) controlled based on the determined target position and target posture.

3. The information processing method according to claim 1, wherein the computer determines waypoints of the mobile body (1) including a plurality of the target positions for shooting each of a plurality of the areas requiring inspection.

4. A program for causing a computer (3) to execute the information processing method according to any one of claims 1 to 3.

5. A system comprising a control apparatus (2) and an information processing apparatus (3) for determining a target position and target posture about a mobile body (1) including an imaging apparatus for inspecting an object;
wherein the information processing apparatus (3) comprises a processing unit (11);
wherein the processing unit (11) is configured to calculate three-dimensional data about the object based on a plurality of images obtained by shooting the object using the imaging apparatus, and to calculate positions and postures of the imaging apparatus when capturing the plurality of images; and
wherein the processing unit (11) is configured to determine a position and posture of the imaging apparatus when shooting an area requiring inspection of the object identified based on the images obtained by shooting the object and the three-dimensional data, from among the calculated positions and postures of the imaging apparatus;
**characterized in that**:
the processing unit (11) is configured to determine the target position and target posture about the mobile body (1) including the imaging apparatus using the determined position and posture of the imaging apparatus; and
the control apparatus (2) is configured to control a position and posture of the mobile body (1) based on the determined target position and target posture, for shooting the area requiring inspection with the imaging apparatus in a subsequent inspection.

## Patentansprüche

1. Informationsverarbeitungsverfahren zum Bestimmen einer Zielposition und einer Ziellage bezüglich eines mobilen Körpers (1), der eine Bildaufnahmevorrichtung zum Inspizieren eines Objekts umfasst,
wobei das Verfahren umfasst:
durch einen Computer (3), Berechnen dreidimensionaler Daten über das Objekt auf der Grundlage einer Mehrzahl von Bildern, die durch Aufnehmen des Objekts mit der Bildaufnahmevorrichtung erhalten werden, und Berechnen von Positionen und Lagen der Bildaufnahmevorrichtung beim Erfassen der Mehrzahl von Bildern; und
durch den Computer (3), Bestimmen einer Position und Lage der Bildaufnahmevorrichtung beim Aufnehmen eines inspektionsbedürftigen Bereichs des Objekts, der auf der Grundlage der durch Aufnehmen des Objekts erhaltenen Bilder und der dreidimensionalen Daten identifiziert wird, aus den berechneten Positionen und Lagen der Bildaufnahmevorrichtung;
**dadurch gekennzeichnet, dass** das Verfahren umfasst:
durch den Computer (3), Bestimmen der Zielposition und der Ziellage bezüglich des mobilen Körpers (1), der die Bildaufnahmevorrichtung umfasst, unter Verwendung der bestimmten Position und Lage; und
durch eine Steuervorrichtung (2), Steuern einer Position und Lage des mobilen Körpers (1) auf der Grundlage der bestimmten Zielposition und Ziellage, um den inspektionsbedürftigen Bereich mit der Bildaufnahmevorrichtung in einer nachfolgenden Inspektion aufzunehmen.

2. Informationsverarbeitungsverfahren nach Anspruch 1, wobei der Computer eine Veränderung des inspektionsbedürftigen Bereichs anhand des Ergebnisses des Aufnehmens des inspektionsbedürftigen Bereichs unter Verwendung des mobilen Körpers (1) bewertet, der auf der Grundlage der bestimmten Zielposition und Ziellage gesteuert wird.

3. Informationsverarbeitungsverfahren nach Anspruch 1, wobei der Computer Wegpunkte des mobilen Körpers (1) bestimmt, die eine Mehrzahl der Zielpositionen zum Aufnehmen jedes einer Mehrzahl der inspektionsbedürftigen Bereiche umfassen.

4. Programm, das einen Computer (3) veranlasst, das Informationsverarbeitungsverfahren nach einem der Ansprüche 1 bis 3 auszuführen.

5. System, umfassend eine Steuervorrichtung (2) und eine Informationsverarbeitungsvorrichtung (3) zum Bestimmen einer Zielposition und einer Ziellage bezüglich eines mobilen Körpers (1), der eine Bildaufnahmevorrichtung zum Inspizieren eines Objekts umfasst;
wobei die Informationsverarbeitungsvorrichtung (3) eine Verarbeitungseinheit (11) umfasst;
wobei die Verarbeitungseinheit (11) dazu konfiguriert ist, dreidimensionale Daten über das Objekt auf der Grundlage einer Mehrzahl von Bildern zu berechnen, die durch Aufnehmen des Objekts mit der Bildaufnahmevorrichtung erhalten werden, und Positionen und Lagen der Bildaufnahmevorrichtung beim Erfassen der Mehrzahl von Bildern zu berechnen; und
wobei die Verarbeitungseinheit (11) dazu konfiguriert ist, eine Position und Lage der Bildaufnahmevorrichtung beim Aufnehmen eines inspektionsbedürftigen Bereichs des Objekts, der auf der Grundlage der durch Aufnehmen des Objekts erhaltenen Bilder und der dreidimensionalen Daten identifiziert wird, aus den berechneten Positionen und Lagen der Bildaufnahmevorrichtung zu bestimmen;
**dadurch gekennzeichnet, dass**:
die Verarbeitungseinheit (11) dazu konfiguriert ist, die Zielposition und die Ziellage bezüglich des mobilen Körpers (1), der die Bildaufnahmevorrichtung umfasst, unter Verwendung der bestimmten Position und Lage der Bildaufnahmevorrichtung zu bestimmen; und
die Steuervorrichtung (2) dazu konfiguriert ist, eine Position und Lage des mobilen Körpers (1) auf der Grundlage der bestimmten Zielposition und Ziellage zu steuern, um den inspektionsbedürftigen Bereich mit der Bildaufnahmevorrichtung in einer nachfolgenden Inspektion aufzunehmen.

## Revendications

1. Procédé de traitement d'informations pour déterminer une position cible et une posture cible concernant un corps mobile (1) comprenant un appareil d'imagerie pour inspecter un objet,
dans lequel le procédé comprend :
par un ordinateur (3), le calcul de données tridimensionnelles concernant l'objet sur la base d'une pluralité d'images obtenues par prise de vue de l'objet à l'aide de l'appareil d'imagerie, et le calcul de positions et de postures de l'appareil d'imagerie lors de la capture de la pluralité d'images ; et
par l'ordinateur (3), la détermination d'une position et d'une posture de l'appareil d'imagerie lors de la prise de vue d'une zone nécessitant une inspection de l'objet, identifiée sur la base des images obtenues par prise de vue de l'objet et des données tridimensionnelles, parmi les positions et postures calculées de l'appareil d'imagerie ;
**caractérisé en ce que** le procédé comprend :
par l'ordinateur (3), la détermination de la position cible et de la posture cible concernant le corps mobile (1) comprenant l'appareil d'imagerie à l'aide de la position et de la posture déterminées ; et
par un appareil de commande (2), la commande d'une position et d'une posture du corps mobile (1) sur la base de la position cible et de la posture cible déterminées, pour la prise de vue de la zone nécessitant une inspection avec l'appareil d'imagerie lors d'une inspection ultérieure.

2. Procédé de traitement d'informations selon la revendication 1, dans lequel l'ordinateur évalue un changement de la zone nécessitant une inspection à partir du résultat de la prise de vue de la zone nécessitant une inspection à l'aide du corps mobile (1) commandé sur la base de la position cible et de la posture cible déterminées.

3. Procédé de traitement d'informations selon la revendication 1, dans lequel l'ordinateur détermine des points de passage du corps mobile (1) comprenant une pluralité des positions cibles pour la prise de vue de chacune d'une pluralité des zones nécessitant une inspection.

4. Programme pour amener un ordinateur (3) à exécuter le procédé de traitement d'informations selon l'une quelconque des revendications 1 à 3.

5. Système comprenant un appareil de commande (2) et un dispositif de traitement d'informations (3) pour déterminer une position cible et une posture cible concernant un corps mobile (1) comprenant un appareil d'imagerie pour inspecter un objet ;
dans lequel le dispositif de traitement d'informations (3) comprend une unité de traitement (11) ;
dans laquelle l'unité de traitement (11) est configurée pour calculer des données tridimensionnelles concernant l'objet sur la base d'une pluralité d'images obtenues par prise de vue de l'objet à l'aide de l'appareil d'imagerie, et pour calculer des positions et des postures de l'appareil d'imagerie lors de la capture de la pluralité d'images ; et
dans laquelle l'unité de traitement (11) est configurée pour déterminer une position et une posture de l'appareil d'imagerie lors de la prise de vue d'une zone nécessitant une inspection de l'objet, identifiée sur la base des images obtenues par prise de vue de l'objet et des données tridimensionnelles, parmi les positions et postures calculées de l'appareil d'imagerie ;
**caractérisé en ce que** :
l'unité de traitement (11) est configurée pour déterminer la position cible et la posture cible concernant le corps mobile (1) comprenant l'appareil d'imagerie à l'aide de la position et de la posture déterminées de l'appareil d'imagerie ; et
l'appareil de commande (2) est configuré pour commander une position et une posture du corps mobile (1) sur la base de la position cible et de la posture cible déterminées, pour la prise de vue de la zone nécessitant une inspection avec l'appareil d'imagerie lors d'une inspection ultérieure.
